# EUROPEAN PATENT APPLICATION

(11) **EP 4 712 366 A1**
(43) Date of publication of application: **18.03.2026**
(21) Application number: 25196696.6
(22) Date of filing: 19.08.2025
(51) Int. Cl.: H04B 10/112

(54) **FREE SPACE OPTICAL COMMUNICATIONS TERMINAL**

(30) Priority: 17.09.2024 GB 202413670
(71) Applicant: Airbus Operations Limited, Bristol BS34 7PA (GB)
(72) Inventor: QUINTANA SANCHEZ, Crisanto, Bristol, BS34 7PA (GB); ERRY, Gavin, Bristol, BS34 7PA (GB); THUEUX, Yoann, Bristol, BS34 7PA (GB)
(74) Representative: EIP

(57) **Abstract**

Disclosed is a free-space optical communications (FSO) terminal. The FSO terminal comprises a first arm comprising a combined transmit-receive system configured to produce a data beam, encoding data, for transmission to a target and receive a received data beam from the target, a second arm comprising a component configured to transmit a further transmitted beam or utilise a further received beam, a pointing unit configured to steer the data beam to the target and/or the received data beam received from the target, and an optical fibre comprising a single-mode portion configured to carry the transmitted data beam and received data beam and couple the first arm to the pointing unit, and a multi-mode portion configured to carry the further transmitted beam or the further received beam and couple the second arm to the pointing unit. An FSO system and vehicle comprising an FSO terminal are also disclosed.

## Description

### TECHNICAL FIELD

The present invention relates to free space optical communications terminals.

### BACKGROUND

Free space optical (FSO) communications use light propagating in free space to transmit data. In the context of FSO communications, 'free space' refers to, for example, air, space, vacuum, or similar and is in contrast with communications via solids such as a fibre-optic cable. FSO communications ordinarily rely on direct line of sight between transmitter and receiver and so rely on directing an optical beam between FSO communications terminals. FSO communications can offer higher data rates and improved security as compared to other wireless communications techniques. For example, FSO communications can achieve higher data rates, and can be less susceptible to jamming and interception compared to radio frequency (RF) communications. FSO communications can be useful for example in cases where communication via physical connections, such as fibre optic cables or other data cables, is impractical. One such case is, for example, communications between an aircraft and ground-based terminal.

It is desirable to allow for a reduction in the size, weight, and power (SWaP) requirements of a FSO communications terminal.

### SUMMARY

A first aspect of the present invention provides a free-space optical communications (FSO) terminal comprising: a first arm comprising a combined transmit-receive system configured to produce a data beam, encoding data, for transmission to a target and receive a received data beam from the target, a second arm comprising a component configured to transmit a further transmitted beam to the target or utilise a further received beam from the target, a pointing unit configured to steer the data beam and the further transmitted beam to the target and/or steer the received data beam and the further received beam received from the target, and an optical fibre comprising a single-mode portion configured to carry the transmitted data beam and received data beam and couple the first arm to the pointing unit, and a multi-mode portion configured to carry the further transmitted beam or the further received beam and couple the second arm to the pointing unit.

The FSO terminal of the first aspect can concurrently transmit two beams, one from each arm, and/or concurrently receive two beams, one received at each arm. By using an optical fibre having a single-mode and multi-mode portion, the FSO terminal of the first aspect can combine two arms into a relatively compact space, since light for each arm is guided by the same optical fibre. Such an arrangement can share optical elements for coupling of light into fibre, for example, which can further reduce size and weight of the FSO terminal.

A "beam" as described herein refers generally to an optical signal which propagates through free space between the FSO terminal and the target but which may also be coupled into an optical fibre and propagate within a guided mode of the optical fibre, for example. Accordingly, along an optical path, the beam may undergo multiple stages of propagation through free space and propagation in guided modes of an optical medium.

The single-mode portion and the multi-mode portion each extend along a length of the optical fibre, from a first end of the optical fibre to a second end of the optical fibre. Light can be guided along the single-mode portion through the optical fibre, and can be guided along the multi-mode portion through the optical fibre. It will be appreciated that "single-mode" can refer to being single-mode for a wavelength of interest, or across a wavelength range of interest, such as at typical telecommunication wavelengths, and that the fibre may be multi-mode at other wavelengths. Single-mode can refer to the portion of the fibre being single-mode across a broad wavelength range of interest, such as being single-mode throughout the visible spectrum and/or the near-infrared spectrum. Similarly, the multi-mode portion may be multi-mode for a wavelength of interest, or across a wavelength range of interest.

Transmission of the data beam through the single-mode portion means that it can be transmitted through free space as a relatively collimated beam, which can improve coupling of the data beam into a receiving terminal. When the second arm is configured to produce a further transmitted beam, by being transmitted through the multi-mode portion the further transmitted beam can be transmitted as a relatively divergent beam or can be transmitted from the terminal with a relatively larger diameter (compared with the data beam from the first arm). This can make the further transmitted beam easier to acquire by a receiving terminal, for example. Accordingly, the FSO terminal of the first aspect, in being operable to produce two beams with different properties, provides flexibility of operation as it can be decided which beam is used for a particular purpose, such as depending on whether higher data rates or easier acquisition is preferred, for example.

When the second arm is configured to receive a further beam, the further received beam can be isolated from the received data beam by coupling the received data beam into the single mode portion and the received second beam into the multi-mode portion. Accordingly, the terminal according to the first aspect can concurrently receive two beams, both simultaneously steered by the pointing unit, and provide a respective received beam to the first arm and the second arm.

In an FSO system formed of terminals of the first aspect, i.e. when using symmetrical terminals, transmitted data beams are produced in the single-mode portion of the fibre and so when received by a receiving terminal are received into the single-mode portion of the fibre. This configuration can facilitate increased data transmission rates when compared with terminals which transmit and receive data beams in the multi-mode fibre. Additionally, a beam transmitted from the multi-mode portion is predominantly coupled into the multi-mode portion of the fibre at the receiving terminal, and so the first arm and second arm can be isolated from one another in the sense that the handled optical beams can have reduced cross-talk. Accordingly, the FSO terminal of the first aspect offers a more effective terminal for data transmission when scaled into a network of identical, or symmetrical, terminals, whilst allowing for handling of a second beam, for example in a spatially-multiplexed fashion. The second arm, in some examples, may itself comprise a combined transmit-receive terminal, for example, to thereby augment operation of the first arm. For example, a second data beam which may not require as high data transmission rates as the first beam could be transmitted to and from the second arm. The second arm, in other examples, may only comprise components which utilise a received beam. The second arm, in further examples, may only comprise components which transmit a beam.

Optionally, the component of the second arm is a tracking laser and the further transmitted beam is a transmitted tracking beam. A tracking beam is an optical beam which can be used by a receiving terminal in order to, for example, determine where a sending terminal is located (based on an angle of incidence of the received tracking beam, for example). The tracking beam assists in the acquisition of a data beam sent by the sending terminal, as the tracking beam is typically easier to initially detect and maintain detection of by the receiving terminal. The tracking beam may not encode any particular information, or may encode limited information compared with the data beam, for example. As discussed previously, since the second arm is optically coupled to the pointing unit by the multi-mode portion, the tracking beam emerges from the fibre with an increased beam divergence compared with the single-mode portion. The tracking beam can therefore be transmitted with a larger diameter than a beam emerging from the single-mode portion, for example, which makes the tracking beam easier to acquire by a receiving terminal. This can make it easier to detect by the other terminal which can facilitate increased speed of forming a communications link between the two terminals.

In particular, to establish a communications link it can be important for the tracking beam to have a diameter large enough to fill an aperture of the receiving terminal in order for the receiving terminal to properly track a beam. This is because filling the aperture of the receiving terminal can facilitate decoupling of spatial translation of the tracking beam from reorientation of the tracking beam (i.e. change in angle of incidence of the tracking beam) by a beam position tracking detector. In other words, when a received beam is smaller than the receiving aperture, a beam position tracking detector may detect both translation of the beam across the receiving aperture and changes in orientation of the received beam which produces uncertainty as to whether the source of the received beam has moved relative to the receiving terminal, or whether the point of incidence of the received beam on the receiving terminal has shifted. In long-range communications, optical beams typically propagate far enough to diverge to a suitable diameter to satisfy this condition of beam diameter being larger than receiver aperture. In shorter-range communications, it can be difficult to achieve sufficient beam divergence due to the decreased propagation distances. The terminal of the first aspect, in particular when using a tracking laser in the second arm and transmitting a tracking beam through the multi-mode portion, can therefore provide a suitable solution to this problem, by producing a tracking beam with relatively large divergence which is suitable for short-range communications, whilst the data beam remains relatively narrow to retain sufficient coupling strength and hence data transmission rates.

Optionally, the optical fibre is a double-clad fibre, the single-mode portion is a single-mode core and the multi-mode portion is a multi-mode cladding surrounding the single-mode core. The concentric design of the double-clad fibre can simplify optical coupling by arranging the portions around a common optical axis, which can simplify the sharing of optical elements. Beams emerging from the single-mode core and the multi-mode cladding can be inherently colinear in so far as they propagate along the common optical axis.

Optionally, the FSO terminal is configured to collimate the data beam such that the data beam is transmitted to the target as a collimated beam having a smaller beam diameter than the transmitted tracking beam. As described previously, this can improve coupling of the data beam at a receiving terminal as beam power remains relatively concentrated compared with a diverging beam, for example, which can make it more efficiently coupled to a receiver, for example. The tracking beam, having a larger diameter, can be more readily detected for beam tracking purposes, for example, and so can allow for quicker formation of a communications link. This can improve data transmission rates between FSO terminals.

Optionally, the FSO terminal is configured to collimate the data beam such that the data beam is transmitted to the target as a collimated beam having a smaller beam divergence than the tracking beam. As the beams propagate, even if they have a similar diameter at the point of transmission, can have different diameters at a target due to different beam divergences. As described above, a relatively narrow data beam resulting from a relatively low divergence and relatively wide tracking beam resulting from a relatively wide divergence can allow for more effective performance of an FSO system.

Optionally, the FSO terminal is configured such that the data beam and tracking beam propagate along a shared optical path and are steered together by the pointing unit. This can reduce or remove a need for separate steering components, which can reduce a size and/or weight of the FSO terminal. The data beam and tracking beam may be produced concurrently.

Optionally, the FSO terminal comprises a beamsplitter having a first port addressing the optical fibre, a second port addressing the pointing unit, and a third port addressing a third arm comprising a further component configured to utilise the received beam or another received beam received from the target. This can allow a portion of received light to be provided to the third arm, in addition to or instead of to the first or second arm via the optical fibre.

Optionally, the further component is a beam position tracking detector. In some examples, the beam position tracking detector is a quadrant detector. The beam position tracking detector can aid with coupling of a received beam into a receiver component. The beam position tracking detector may be operable to determine the origin of a received beam by measuring the angle of incidence of the received beam. The beam position tracking detector may track a portion of a received data beam, such as the further received beam or the another received beam, for example. Beam position data determined by the beam position tracking detector can be used to control the pointing unit, to facilitate steering of the received data beam, for example.

Optionally, the further received beam or the another received beam is a received tracking beam received from the target, and the beam position tracking detector is configured to track the received tracking beam. The FSO terminal may send all of a received data beam to a receiver component, whilst using the received tracking beam for steering purposes, such as calculating an origin of the received beam, for example, and/or facilitating coupling of the received data beam.

Optionally, the received tracking beam has a different wavelength and/or polarisation to the data beam. This can allow the beams, which may be propagated colinearly, to be additionally distinguished based on wavelength and/or polarisation, for example. In some examples, the tracking beam can have a first circular polarisation, such as left-handed, and the data beam have the opposite circular polarisation, e.g. right-handed. In some examples, the tracking beam and the data beam can have relatively similar wavelengths, such as separated by 10-50 nanometres, such that they are handled in a similar fashion by refractive optic elements of the FSO terminal, for example, but can nevertheless be distinguished by filtering optics. In examples, the transmitted tracking beam may have a different wavelength and/or polarisation to the data beam.

Optionally, the beamsplitter is configured to reflect the received tracking beam to the third arm and transmit the received data beam to the first arm. In some examples, the beamsplitter is wavelength selective, such as being a dichroic beamsplitter, and can distinguish between the received tracking beam and the received data beam based on the respective wavelengths of the received tracking beam and the received data beam. In some examples, the beamsplitter can be polarisation selective, such as being a polarising beamsplitter, and can distinguish between the received tracking beam and the received data beam based on the respective polarisations of the received tracking beam and the received data beam. Combination of polarisation and wavelength selective components can allow greater isolation of the received data beam and received tracking beam, for example.

Optionally, the beamsplitter is a pellicle beamsplitter, and the transmitted tracking beam, data beam and/or received beams passing therethrough are diverging or converging respectively. A pellicle beamsplitter can minimise spherical aberration of non-collimated beams.

Optionally, the first arm and/or second arm comprises an optical filter configured to filter out the received tracking beam. This can reduce or prevent the received tracking beam from entering the first or second arm, which may disrupt operations of the first or second arm, for example.

Optionally, the combined transmit-receive system comprises an optical circulator optically coupled to the optical transmitter and the optical receiver. This can reduce cross-talk between the optical transmitter and optical receiver.

Optionally, the optical circulator is a fibre optic circulator and is coupled to the transmitter and the optical receiver by fibre optics and comprises an optical fibre interface for transmitting the data beam and receiving the received data beam. The first arm, in comprising a fibre-optic architecture, can have a lightweight construction and can be less prone to misalignment due to vibrations, for example, since light is guided within modes of the fibre optics.

A second aspect of the present invention provides a vehicle comprising a free-space optical communications terminal according to the first aspect. That is, a vehicle comprising an FSO terminal comprising: a first arm comprising a combined transmit-receive system configured to produce a data beam, encoding data, for transmission to a target and receive a received data beam from the target, a second arm comprising a component configured to transmit a further transmitted beam or utilise a further received beam from the target, a pointing unit configured to steer the data beam and the further transmitted beam to the target and/or the received data beam and the further received beam received from the target, and an optical fibre comprising a single-mode portion configured to carry the transmitted data beam and the received data beam and couple the first arm to the pointing unit, and a multi-mode portion configured to carry the further transmitted beam and the further received beam and couple the second arm to the pointing unit. The vehicle can utilise the terminal for communications, and in particular can be suited for short-range communications, for example.

Optionally, the vehicle is an aircraft. The aircraft can use the terminal for short-range communications, for example with a ground terminal or a terminal on a ground vehicle, such as when at an airport. Optionally, the vehicle is a ground vehicle, such as a car.

A third aspect of the present invention provides a free-space optical communications (FSO) system comprising a first FSO terminal and a second FSO terminal. The first FSO terminal comprises a first arm comprising a combined transmit-receive system configured to produce a data beam, encoding data, for transmission to the target and receive a received data beam from the target, a second arm comprising a tracking laser configured to produce a tracking laser beam, a pointing unit configured to steer the data beam to the target and to steer the received data beam and the received tracking beam received from the target, and an optical fibre comprising a single-mode portion and a multi-mode portion, wherein the first arm is optically coupled to the pointing unit by the single-mode portion of the fiber, and the second arm is optically coupled to the pointing unit by the multi-mode portion of the fiber. The second FSO terminal comprises a tracking arm comprising a beam position tracking detector configured to receive and detect a position of the tracking beam received from the first FSO terminal, and a receiver arm comprising a data beam receive system configured to receive data encoded in the data beam received from the first FSO terminal.

Optionally, the first FSO terminal is distanced from the second FSO terminal by a separation distance, and the first FSO terminal is configured such that the tracking beam diverges, during propagation along the separation distance, to have a beam diameter larger than a diameter of a receive aperture of the second FSO terminal.

Optionally, the separation distance is between 10 and 100 metres.

Optionally, the first and second FSO terminals are substantially identical. In such examples, facilitated by the symmetry between the first and second FSO terminals, the data beam sent by the first FSO terminal and received by the second FSO terminal is coupled into a single-mode portion of a fibre in the receiver arm of the second FSO terminal, whilst the tracking beam sent by the first FSO terminal and received by the second FSO terminal is coupled to the receiver system of the second FSO terminal, and isolated from the combined transmit-receive system of the second FSO terminal.

Optionally, one of the first and second FSO terminals is on or part of an aircraft, and the other of the first and second FSO terminal is on or part of a ground vehicle or a ground structure. As described for the first aspect, the FSO system can be particularly suited for short-range communications, such as communications which take place whilst an aircraft is at an airport and in communications with a terminal on a ground vehicle or ground structure.

Optional features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of a free space optical communications (FSO) terminal according to an example;
Figure 2 shows a schematic view of an optical fibre of the FSO terminal of Figure 1 according to an example;
Figure 3 shows a schematic view of beams transmitted by the optical fibre of Figure 2; and
Figure 4 illustrates a network of FSO terminals distributed between vehicles and a ground structure, according to an example.

### DETAILED DESCRIPTION

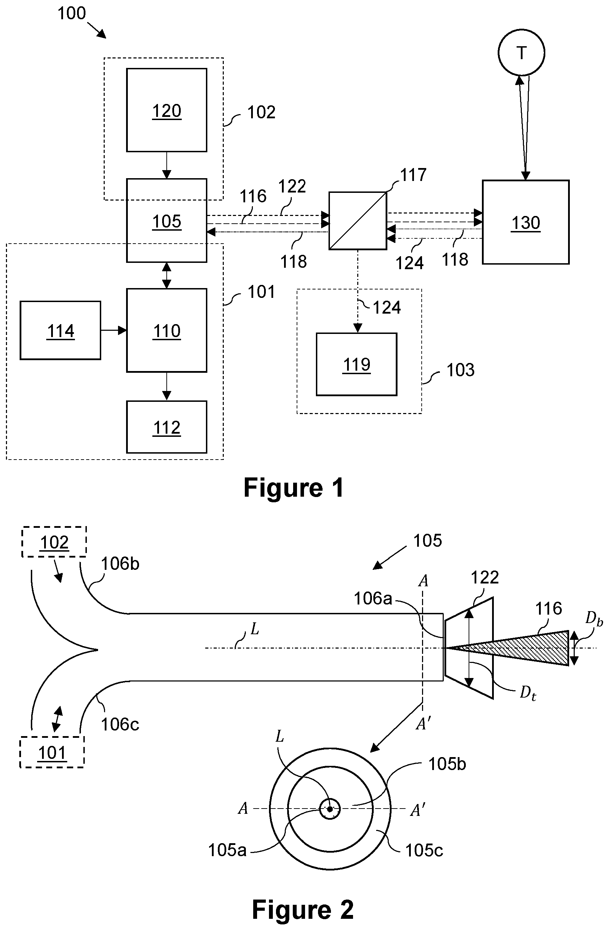

A free-space optical communications (FSO) terminal 100 according to the present disclosure is depicted in Figure 1. The FSO terminal 100 has a first arm 101 and a second arm 102. The first arm 101 is a combined transmit-receive system which comprises an optical source 112, operable to generate an optical beam with data for communication encoded therein, and an optical receiver 114, operable to decode data encoded in a received optical beam. The optical source 112 and optical receiver 114 each interface with an optical fibre circulator 110. The second arm 102 has a tracking laser 120 which is operable to produce a further optical beam, described in more detail later. An optical fibre 105, described in more detail later with reference to Figure 2, optically couples the first arm 101 and the second arm 102 to a first port of a beamsplitter 117. A second port of the beamsplitter 117 addresses a third arm 103 which includes a beam positioning tracking detector 119. A third port of the beamsplitter 117 addresses a pointing unit 130 configured to steer beams to and/from a target T. Generally, light produced in the first arm 101 and/or second arm 102 is transmitted to the pointing unit 130, whereupon it is steered to the target T by the pointing unit 130. Light received by the pointing unit 130 can be apportioned between the third arm 103 and the first and/or second arms 101, 102.

The optical fibre 105 is a 2x1 optical coupler which transmits light to and from (i) a first portion 106a of the optical fibre 105 to (ii) a second portion 106b of the optical fibre 105 and third portion 106c of the optical fibre 105. The first portion 106a is specifically a double-clad fibre which has a circular single-mode central core 105a surrounded by a circular multi-mode cladding 105b, in turn surrounded by a circular exterior cladding 105c, as seen in cut-through A-A' which is inset to Figure 2. An optical axis L of the first portion 106a is defined by a geometric centre of the central core 105.

The second portion 106b comprises a multi-mode fibre which is for coupling light into and from the multi-mode cladding 105b. The second portion 106b is optically coupled to the second arm 102, and specifically to the tracking laser 120.

The third portion 106c comprises a single-mode fibre which is for coupling light into and from the single-mode core 105a. The third portion 106c is optically coupled to the first arm 101 and specifically to the fibre-optic circulator 110, via which light from the optical source 114 can be received and via which light can be sent to the optical receiver 112.

In use, light emerges from the first portion 106a depending on whether the light has been guided through the single-mode core 105a or the multi-mode cladding 105b. In particular, light from the optical source 114 of the first arm 101 is coupled to the third portion 106c and thereafter to the single-mode core 105a. Light from the optical source 114 emerges from the first portion 106a of the optical fibre 105 as a transmitted data beam 116, encoding data to be transmitted to the target T. Light from the tracking laser 120 is coupled to the second portion 106b and thereafter to the multi-mode cladding 105b. Light from the tracking laser 120 emerges from the first portion 106a as a tracking beam 122, and can be used by the target T for the purpose of acquiring the transmitted data beam 116. The tracking beam 122 and data beam 119 emerge colinearly from the optical fibre 105 and so can be steered simultaneously by common optical elements of the pointing unit 130.

Generally, the FSO terminal 100 is configured to transmit a tracking beam 122 which arrives at the target T as a broader beam than the transmitted data beam 116. In particular, it can be useful for the tracking beam 122 to arrive having a beam diameter which is larger than a receiving aperture 210 of the target T, since this can improve tracking of the tracking beam 122 by allowing the target T to decouple incident beam angle from incident beam position which may otherwise be difficult to decouple if the beam is smaller than the receiving aperture.

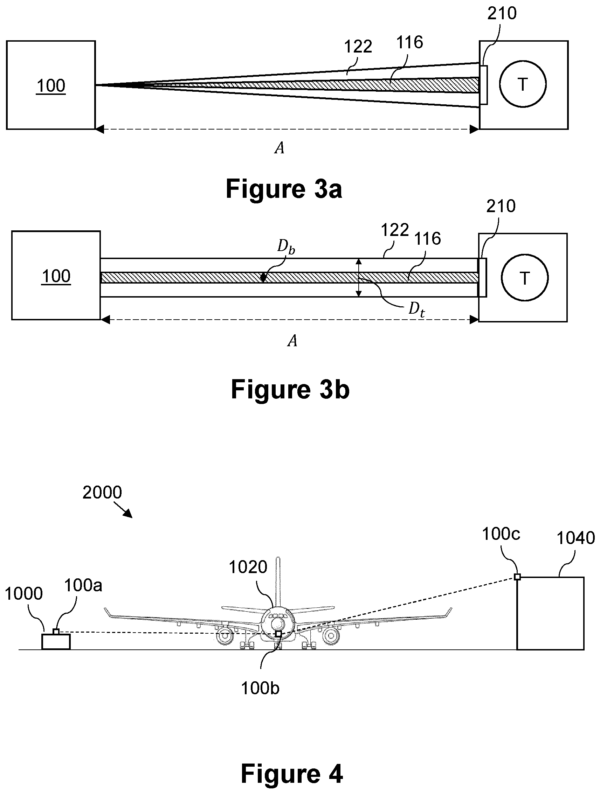

The above-mentioned beam diameter condition can be achieved by either or both of (i) larger divergence of the transmitted data beam from the optical fibre 105 and (ii) larger beam diameter of the transmitted data beam from the optical fibre 105. As can be seen by Figure 2, and as described in more detail in view of Figures 3a and 3b, the tracking beam 122 emerges from the first portion 106a of the optical fibre 105 with a larger divergence than the transmitted data beam 116. Divergence measures the degree to which the beam spreads as it propagates. The tracking beam 122 also emerges from the first portion 106a with a larger beam diameter *Dₜ*, measured perpendicularly to a direction of propagation along the optical axis *L,* than a beam diameter *D_{b}* of the transmitted data beam 116. Depending on the precise optical arrangement of the FSO terminal 100, the tracking beam 122 may emerge from the FSO terminal 100 with a requisite beam diameter, and being substantially collimated during propagation from the FSO terminal 100 to the target T, as depicted in Figure 3b. Alternatively, the tracking beam 122 may be produced with sufficient divergence that during propagation over a distance A between the FSO terminal 100 and the target T, the tracking beam 122 diverges sufficiently to fill the receiving aperture 210 of the target T. Both of these aspects can be combined; the tracking beam may emerge from the FSO terminal 100 having a larger diameter than the data beam 116 and subsequently diverge during propagation to a requisite beam diameter to fill the receiving aperture 210 of the target T.

In this way, the data beam 116 can have a higher intensity due to power being spread over a relatively small spatial extent of the beam, compared with the tracking beam 122, which can improve data transmission rates during communication between the FSO terminal 10 and the target T. Meanwhile, the tracking beam 122, for which maintaining optimal optical coupling may be less important, is easier to acquire by the target T because the tracking beam 122 is broader than the data beam 116, and so in turn can be used to facilitate coupling of the data beam 116 into an optical receiver of the target T.

Considering now the FSO terminal 100 when receiving communications from the target T, and considering an example where the target T is a substantially identical FSO terminal to the FSO terminal 100: a received tracking beam 124 and received data beam 118 are received by the pointing unit 130 and provided to the beamsplitter 117. The beamsplitter 117 reflects the received tracking beam 124 to the beam position tracking detector 119. The received data beam 118 is transmitted through the beamsplitter 117 to the optical fibre 105. The beam position tracking detector 119 tracks the position of the received tracking beam 124 and uses this to infer the position of the received data beam 118. For example, this can be performed by knowing a spatial relationship between the received tracking beam 124 and the received data beam 118, such as that the received tracking beam 124 and the received data beam 118 are colinear. In such a case, when the received tracking beam 124 is steered by the pointing unit 130 to a central position of the beam position tracking detector 119, it can be inferred that the received data beam 118 is also aligned along the optical axis L of the optical fibre 105, which can allow the received data beam 118 to be coupled into the single-mode core 105a of the optical fibre 105. The pointing unit 130 and in some cases other optical elements, such as a fibre-coupling stage to which the optical fibre 105 is attached, can then be controlled in order to couple the received data beam 118 into the single-mode core 105a of the optical fibre 105. The received data beam 118 is then received by the optical receiver 112. For example, as is known per se, a beam position tracking detector 119, such as a quadrant detector, may determine the orientation (or changes in orientation) of the received tracking beam 124 relative to the FSO terminal 100. For example, a quadrant detector may comprise a planar detector having four quadrants arranged in a square array about a central position. The detected position of the tracking beam 124 on the quadrant detector (e.g. the particular quadrant(s) in which the tracking beam 124 is detected) may be indicative of the current orientation of the received tracking beam 124 relative to the FSO terminal 100 (or a change in orientation of the received tracking beam 124 relative to the FSO terminal 100 that may have occurred). The detected position of the tracking beam 124 may be used to control the pointing unit 130 to steer the tracking beam 124 towards the central position. For example, the detected position may be output by the beam position tracking detector 119 to the pointing unit 130, and the pointing unit 130 may apply a suitable adjustment to the beam steering to steer the tracking beam 124 to the central position. This may be repeated, for example substantially continuously, to maintain the detected position of the tracking beam 124 at the central position of the tracking detector 119 despite changes in orientation of the tracking beam 124 relative to the FSO 100, for example due to changes in the position of the target T relative to the FSO 100. As described above, in turn, this may maintain the coupling of the received data beam 118 to the single mode core 105a of the optical fibre 105, and hence maintain data communication between the FSO terminal 100 and the target T at a relatively high rate.

As mentioned above, separation of the received tracking beam 124 from the received data beam 118 may be provided by their coupling into respective different portions of the optical fibre 105. Additionally or alternatively, separation of the received tracking beam 124 from the received data beam 118 can be performed on the basis of wavelength selectivity, for example, and/or polarisation selectivity - the beamsplitter may be dichroic and/or polarisation-selective and the tracking and data beams transmitted at different wavelengths and/or with different polarisation, for example. Filters may be provided in the first arm 101 to remove any stray tracking beam light, for example.

Figure 4 illustrates a system 2000 of FSO terminals 100a, 100b, 100c which form a communications network. In particular, a car 1000 hosts a first terminal 100a, an aircraft 1020 hosts a second terminal 100b, and a ground structure 1040 hosts a third terminal 1040. Each FSO terminal 100a, 100b, 100c may be the same as or similar to the FSO terminal 100 of Figure 1. Due to the increased beam divergence of tracking beams, the FSO terminals are suited for use in relatively shorter-range communications, wherein terminals are separated by distances on the order of 10-100 metres, for example. This can be contrasted with longer-range communications performed over distances on the order of kilometres. The use of terminals to perform shorter-range communications may be the case at an airport, for example. Furthermore, the point-to-point nature of FSO communications can be more secure as communicated data is not broadcast over a large, interceptable area, for example. The use of the FSO terminals 100a, 100b, 100c facilitates a short-range FSO communications network where other forms of communication may lack bandwidth due to large numbers of communication entities.

A vehicle equipped with the FSO terminal, such as the aircraft 1020 or car 1000, is able to partake in free-space optical communications over short-range. For example, the aircraft 1020, can quickly offload data such as flight data and receive new communicated data via the system 2000 of FSO terminals. This can reduce operational downtime of the aircraft. In some examples, the aircraft 1020 may comprise multiple FSO terminals which operate as a communications network within the aircraft 1020 itself, communicating data from one part of the aircraft to another part of the aircraft.

Above embodiments are to be understood as illustrative examples of the invention. Further embodiments of the invention are envisaged:

For example, in the FSO terminal 100 of Figure 1, the second arm 102 is provided with a tracking laser 120. However, in other examples, the second arm 102 may be provided with a component which receives, rather than transmits, a beam. For example, light received by the terminal can be predominantly or entirely coupled into the multi-mode portion of the fibre to guide it to the second arm 102 rather than the first arm 101. In some examples, the second arm 102 may be configured to both transmit and receive a beam, for example by including a further optical source and a further optical receiver to the first arm.

The optical fibre 105 is described as being a double-clad optical fibre coupler in a 2x1 configuration but may, in other examples, have a different configuration such as being a triple-clad optical fibre, or being in a 2x2 configuration, for instance. The multi-mode portion of the optical fibre may have a larger acceptance angle / emission angle, for example characterised by having a larger numerical aperture, compared with the single-mode portion. Modes of the multi-mode portion may each have a higher effective refractive index than the single mode of the single-mode portion. It will be appreciated that the optical fibre 105 may comprise multiple individual fibres which are co-located and that exchange of light between fibres may occur through evanescent field coupling, for example, in order to produce the functionality described, and so does not necessarily require a sequence of optical fibres joined end-to-end.

The beamsplitter 117 does not need to be wavelength and/or polarisation selective; for instance, both a portion of the received data beam 118 and the received tracking beam 124 may be provided to the beam position tracking detector 119, and both a further portion of the received data beam 118 and the received tracking beam 124 may be provided to the optical fibre 105. Where the received data beam and the received tracking beam have different beam profiles, that is a different spatial distribution of power, they can be optically coupled into the optical fibre in different ways - the received data beam can be predominantly coupled into the single-mode fibre portion whilst the received tracking beam can be predominantly coupled into the multi-mode fibre portion. Filters, based on wavelength and/or polarisation, for example, may be provided in each or both of the first and second arm 101, 102, or at the beam position tracking detector 119, in order to remove unwanted light.

The third arm may comprise components other than a beam position tracking detector; for example, a beam profiler, a spectrometer, an optical receiver, and the like. In some examples, there may not be a beamsplitter 117 or third arm 103 at all, and the first arm 101, second arm 102, and optical fibre 105 may directly couple to the pointing unit 130.

It is to be understood that any feature described in relation to any one embodiment may be used alone, or in combination with other features described, and may also be used in combination with one or more features of any other of the embodiments, or any combination of any other embodiments. Furthermore, equivalents and modifications not described above may also be employed without departing from the scope of the invention, which is defined in the accompanying claims.

It is to be noted that the term "or" as used herein is to be interpreted to mean "and/or", unless expressly stated otherwise.

## Claims

1. A free-space optical communications (FSO) terminal comprising:
a first arm comprising a combined transmit-receive system configured to produce a data beam, encoding data, for transmission to a target and receive a received data beam from the target,
a second arm comprising a component configured to transmit a further transmitted beam to the target or utilise a further received beam from the target,
a pointing unit configured to steer the data beam and the further transmitted beam to the target and/or steer the received data beam and the further received beam received from the target, and
an optical fibre, wherein the optical fibre is a double-clad fibre comprising
a single-mode core configured to carry the transmitted data beam and the received data beam and couple the first arm to the pointing unit, and
a multi-mode cladding surrounding the single-mode core and configured to carry the further transmitted beam and the further received beam and couple the second arm to the pointing unit.

2. The FSO terminal according to claim 1, wherein the component is configured to transmit the further transmitted beam, wherein the component is a tracking laser and the further transmitted beam is a transmitted tracking beam.

3. The FSO terminal according to claim 2, wherein the FSO terminal is configured to collimate the data beam such that the data beam is transmitted to the target as a collimated beam having a smaller beam diameter than the transmitted tracking beam; and/or wherein the FSO terminal is configured to collimate the data beam such that the data beam is transmitted to the target as a collimated beam having a smaller beam divergence than the transmitted tracking beam.

4. The FSO terminal according to claims 2 or 3, wherein the FSO terminal is configured such that the data beam and the transmitted tracking beam propagate along a shared optical path and are steered together by the pointing unit.

5. The FSO terminal according to any one of claims 2 to 4, wherein the terminal comprises a beamsplitter having a first port addressing the optical fibre, a second port addressing the pointing unit, and a third port addressing a third arm comprising a further component configured to utilise the further received beam or another received beam received from the target.

6. The FSO terminal according to claim 5, wherein the further component is a beam position tracking detector.

7. The FSO terminal according to claim 6, wherein the further received beam or the another received beam is a received tracking beam received from the target, and wherein the beam position tracking detector is configured to track the received tracking beam.

8. The FSO terminal according to claim 7, wherein the received tracking beam has a different wavelength and/or polarisation to the received data beam.

9. The FSO terminal according to claim 7 or claim 8, wherein the beamsplitter is configured to reflect the received tracking beam to the third arm and transmit the received data beam to the first arm; and/or wherein the first arm and/or second arm comprises an optical filter configured to filter out the received tracking beam.

10. The FSO terminal according to any previous claim, wherein the combined transmit-receive system comprises an optical circulator optically coupled to the optical transmitter and the optical receiver, optionally wherein the optical circulator is a fibre optic circulator and is coupled to the transmitter and the optical receiver by fibre optics and comprises an optical fibre interface for transmitting the data beam and receiving the received data beam.

11. A vehicle comprising a free-space optical communications terminal according to any one of claims 1 to 10, optionally wherein the vehicle is an aircraft.

12. A free-space optical communications (FSO) system comprising a first FSO terminal and a second FSO terminal,
the first FSO terminal comprising:
a first arm comprising a combined transmit-receive system configured to produce a data beam, encoding data, for transmission to the target and receive a received data beam from the target,
a second arm comprising a tracking laser configured to produce a tracking beam,
a pointing unit configured to steer the data beam and tracking beam to the target, and to steer the received data beam and received tracking beam received from the target, and
an optical fibre, wherein the optical fibre is a double-clad fibre comprising a single-mode core and a multi-mode cladding surrounding the single-mode core, wherein the first arm is optically coupled to the pointing unit by the single-mode core of the fiber, and the second arm is optically coupled to the pointing unit by the multi-mode cladding of the fiber;
the second FSO terminal comprising:
a tracking arm comprising a beam position tracking detector configured to receive and detect a position of the tracking beam received from the first FSO terminal, and
a receiver arm comprising a data beam receiver system configured to receive data encoded in the data beam received from the first FSO terminal.

13. The FSO system of claim 12, wherein the first FSO terminal is distanced from the second FSO terminal by a separation distance, and the first FSO terminal is configured such that the tracking beam diverges, during propagation along the separation distance, to have a beam diameter larger than a diameter of a receive aperture of the second FSO terminal; optionally wherein the separation distance is between 10 and 100 metres.

14. The FSO system according to claim 12 or claim 13, wherein one of the first or second FSO terminal is on or part of an aircraft and the other of the first and second FSO terminal is on or part of a ground vehicle or a ground structure.

15. The FSO system of claim 14, wherein the first and second FSO terminals are substantially identical.
